# EUROPÄISCHE PATENTSCHRIFT

(11) **EP 2 275 470 B1**
(45) Veröffentlichungstag und Bekanntmachung des Hinweises auf die Patenterteilung: **15.02.2012**
(21) Anmeldenummer: 09163083.0
(22) Anmeldetag: 18.06.2009
(51) Int. Cl.: C08G 65/00

(54) **Verfahren zur Herstellung von Monohydroxypolyalkylenoxiden**
Method for manufacturing monohydroxypolyalkylene oxides
Procédé de fabrication de monohydroxypolyalkylenoxides

(43) Veröffentlichungstag der Anmeldung: 19.01.2011
(73) Patentinhaber: BASF SE, 67056 Ludwigshafen (DE)
(72) Erfinder: Klumpe, Markus, 68163, Mannheim (DE); Zipplies, Matthias, 67434, Neustadt (DE)

(56) Entgegenhaltungen:
- EP-A- 0 884 290
- WO-A-2006/028745
- WO-A-2006/036825
- WO-A-2006/061110

## Beschreibung

Die vorliegende Erfindung betrifft ein Verfahren zur Herstellung von Monohydroxypolyalkylenoxiden (MPAO), die im Wesentlichen frei von Diolen sind.

Das Verfahren eignet sich zum Herstellung von Gemischen von Monohydroxypolyalkylenoxiden mit einer oligomodalen Molmassenverteilung beansprucht, welche mindestens zwei Maxima aufweisen, wobei der Unterschied der mittleren molaren Massen zweier Maxima 80 % bis 125 % der molaren Masse der Komponente mit dem höchsten Anteil im Gemisch beträgt und der Gehalt der den einzelnen Maxima zuzuordnenden Komponenten jeweils das 30-bis 1000fache der Komponente beträgt, die dem Maximum mit der nächst höheren molaren Masse zuzuordnen ist. Gegenstand der Erfindung sind Verfahren gemäß Anspruch 1.

Bevorzugte Ausführungsformen sind den Unteransprüchen und der Beschreibung zu entnehmen.

Hochmolekulare Monohydroxypolyalkylenoxide werden unter anderem in großer Menge in der Herstellung von Dispergiermitteln und Fließverbesserern für mineralische Baustoffe eingesetzt. Derartige Polyether werden üblicherweise nach ihrer Herstellung mit einer olefinisch ungesättigten Carbonsäure wie Acrylsäure oder Methacrylsäure verestert. Diese Ester werden in einem weiteren Schritt mit einer Vielzahl möglicher Monomeren zum gewünschten Fließverbesserer copolymerisiert. Dieses ist zum Beispiel in EP 1 507 815 und EP 884 290 beschrieben.

Monohydroxypolyalkylenoxide werden im Allgemeinen durch ringöffnende Polymerisation von Alkylenoxiden mit Monoalkoholen als Starter und basischen Katalysatoren hergestellt. Im Allgemeinen bildet sich hierbei ein signifikanter Anteil an Nebenprodukten mit zwei freien OH-Gruppen, im Folgenden als Diole bezeichnet, aus dem Alkylenoxid und im Reaktionsgemisch vorhandenem Wasser oder bereits im Reaktionsgemisch vorhandenen Diolen. Das Wasser kann auf unterschiedlichem Wege in das Reaktionsgemisch eingetragen werden. So enthalten eingesetzte Ausgangsmaterialien bereits oft kleinere Mengen an Wasser. Werden zum Beispiel feste Metallhydroxide als Katalysatoren eingesetzt, so bildet sich Wasser bei der Reaktion des Katalysators mit den anwesenden alkoholischen Hydroxylgruppen. Eine nicht zu unterschätzende Quelle für Wasser sind außerdem Rückstände aus der Reinigung der Reaktionsbehältnisse.

EP 965605 beschreibt die Reinigung eines Reaktors. Hierzu wird dieser mit Wasser ausgespült, anschließend mit Stickstoff ausgeblasen und anschließend im Vakuum zur weiteren Trocknung aufgeheizt. In einem zweiten Schritt zur Entfernung von Wasser wird der Reaktor erneut mit Methanol und Acetonitril ausgewaschen, mit Stickstoff ausgeblasen und im Vakuum bei erhöhter Temperatur getrocknet. Erst jetzt ist der Reaktor bereit für die Ethoxylierung, die unter Verwendung von festem Natriummethylat als Katalysator durchgeführt wird.

US 2006/0074200 beschreibt die Ethoxylierung eines Starteralkohols unter Verwendung von Kaliumhydrid in Diethylenglykoldimethylether, wobei der Reaktion eine Reinigung des Reaktors mit Diethylenglykoldimethylether voraus geht.

DE 10 2004 059489 beschreibt die Alkoxylierung eines Starteralkohols unter Verwendung eines festen basischen Katalysators, wobei die zur Reaktion vorgelegten Bestandteile vor der Alkoxylierung bei 80 bis 90°C im Vakuum entwässert werden.

Aufgabe der vorliegenden Erfindung war es, ein einfaches Verfahren bereit zu stellen, das geeignet ist, hochreine Monohydroxypolyalkylenoxide herzustellen, die im Wesentlichen frei von Diolen sind. Es wurde angestrebt, dass das Verfahren unabhängig vom Wassergehalt des eingesetzten Katalysators funktioniert. Zudem sollte das Verfahren unter hoher Ausnutzung der benutzten Vorrichtungen effizient auszuführen sein.

Die Aufgabe wurde gelöst durch das eingangs genannte Verfahren zur Herstellung von MPAO, welches das Umsetzen mindestens eines Monoalkohols als Starter mit mindestens einem Alkylenoxid in Gegenwart mindestens eines basischen Katalysators umfasst, wobei der Katalysator als Lösung in Wasser oder Alkohol oder in Lösemittelgemischen, die Wasser und/oder Alkohol enthalten, eingesetzt wird.

Gegenstand der Erfindung sind Verfahren gemäß den Ansprüchen 1-9.

Als basischer Katalysator ist prinzipiell jede Base geeignet. Zu den geeigneten Katalysatoren zählen insbesondere solche, die einen pK_{B} Wert von kleiner als 4,5, bevorzugt kleiner oder gleich 1,74 haben. Der pK_{B} Wert ist der negative dekadische Logarithmus der Basendissoziationskonstante. Er wird nach dem Fachmann bekannten Verfahren bestimmt. Insbesondere sind gemäß der dem Fachmann geläufigen Definition starke oder sehr starke Basen bevorzugt, die in wässriger Lösung im Wesentlichen vollständig dissoziiert vorliegen. (vgl. Zum Beispiel Matthias Otto, Analytische Chemie, Wiley Verlag, 3. Auflage 2006, S. 51ff.). Geeignete Basen können organische oder anorganische Verbindungen sein.
Geeignete anorganische Basen sind zum Beispiel Metallsalze anorganischer Säuren oder Metalloxide oder -hydroxide. In einer bevorzugten Ausführungsform werden Metallhydroxide verwendet. Bevorzugt sind weiterhin Salze anorganischer Säuren mit Alkali- oder Erdalkalimetallen. Besonders bevorzugt sind Hydroxide von Alkali- oder Erdalkalimetallen. Ganz Besonders bevorzugt sind Natriumhydroxid, Kaliumhydroxid oder Calciumhydroxid. Insbesondere bevorzugt ist Kaliumhydroxid.
Geeignete organische Basen können ionisch oder nichtionisch sein oder teilweise ionischen Charakter haben. In einer Ausführungsform sind geeignete Basen organische Verbindungen ohne Metallbestandteil. In einer anderen Ausführungsform werden metallorganische Verbindungen eingesetzt. In einer bevorzugten Ausführungsform ist der Katalysator ein Metallalkoholat. Bevorzugt sind Alkoholate von Alkali- oder Erdalkalimetallen, besonders bevorzugt sind Alkoholate von Natrium oder Kalium. Weiterhin sind Alkoholate von aliphatischen oder cycloaliphatischen Alkoholen bevorzugt. Die Verwendung von aromatischen Alkoholaten ist möglich, jedoch erfindungsgemäß weniger bevorzugt. Besonders bevorzugt sind Alkoholate von linearen oder verzweigten Alkanolen, insbesondere solche von C₁- bis C₅-Alkanolen. Ganz besonders bevorzugt sind Methanolate und Ethanolate. Insbesondere bevorzugt sind Natriummethanolat und Kaliummethanolat. Es ist ebenfalls möglich, Gemische verschiedener Katalysatoren einzusetzen.

Der Katalysator wird erfindungsgemäß in Wasser oder Alkohol oder in Lösemittelgemischen, die Wasser und/oder mindestens einen Alkohol enthalten, gelöst eingesetzt. Dabei kann der Anteil an Wasser und Alkohol in weiten Grenzen variieren, jedoch beträgt der Anteil an Wasser und/oder Alkohol am Lösemittelgemisch mindestens 10 %, besonders bevorzugt mindestens 50%, ganz besonders bevorzugt 80%. Insbesondere bevorzugt besteht das Lösemittel für den Katalysator zu mindestens 80% aus Wasser oder einem Alkohol. Bevorzugte Alkohole sind lineare oder verzweigte Alkanole, besonders bevorzugt mit einem bis fünf Kohlenstoffatomen. Ist die Base ein Alkoholat, so wird als Lösungsmittel zweckmäßigerweise bevorzugt der korrespondierende Alkohol verwendet. Besonders bevorzugte Ausführungsformen des erfindungsgemäßen Verfahrens verwenden Lösungen von Natriumhydroxid oder Kaliumhydroxid in Wasser oder Lösungen von Natriummethanolat oder Kaliummethanolat in Methanol. Dadurch dass der Katalysator nicht als Feststoff sondern als Lösung eingesetzt wird, kann er sehr einfach zugegeben und dosiert werden. Die Gefahr einer Fehldosierung und von Inhomogenitäten bei der Vermischung mit den anderen Komponenten wird gegenüber Feststoffen minimiert. Zudem sind Katalysatorlösungen verglichen mit festen Katalysatoren arbeitshygienisch unbedenklich, da sie nicht stauben und sich lagern lassen, ohne dass Verbackungen, Kompaktierungen oder Ähnliches auftreten.

Das erfindungsgemäße Verfahren kann bei einem breiten Bereich für die Basenkonzentration ausgeführt werden. Bevorzugt handelt es sich um Lösungen mit einem Gehalt an Base von 1 bis 80 Gew%, bevorzugt von 5 bis 70 Gew%, ganz besonders bevorzugt von 10 bis 60 Gew% und insbesondere bevorzugt von 30 bis 50 Gew%.

Im erfindungsgemäßen Verfahren haben Starter die Funktion, die Reaktion mit den Alkylenoxiden zu starten. Als Starter sind prinzipiell alle Stoffe denkbar, die mit Epoxidgruppen unter Ringöffnung reagieren können. Die eingesetzte molare Menge an Starter ist im erfindungsgemäßen Verfahren im Allgemeinen klein gegenüber der molaren Menge an Alkylenoxid.

Erfindungsgemäß werden als Starter Monoalkohole eingesetzt, die im Wesentlichen keine Diole enthalten. Der Anteil an Diolen im Starter kann zum Beispiel weniger als 10000 ppm betragen, in der Regel beträgt er aber weniger als 4000 ppm. Bevorzugt beträgt der Anteil an Diolen im Starter weniger als 1000 ppm. Bei dem Starter handelt es sich um Monoether oder Oligoether, die aus einem oder mehreren Alkylenoxiden aufgebaut sind. Hierfür sind im Allgemeinen dieselben Alkylenoxide bevorzugt, die auch für die Reaktion mit dem Starter zur Herstellung von MPAO bevorzugt sind. Jedoch ist es nicht wesentlich, dass in einer Reaktion der Starter aus denselben Alkylenoxiden aufgebaut ist, mit denen er umgesetzt wird. Bevorzugt enthält der Starter ein bis 15 gleiche oder unterschiedliche Alkylenoxideinheiten. Besonders bevorzugt enthält der Starter ein bis fünf Alkylenoxideinheiten, ganz besonders bevorzugt zwei bis drei Alkylenoxideinheiten.
Geeignete Starter sind an sich bekannt oder können mittels Methoden, die dem Fachmann an sich bekannt sind, hergestellt werden. Für die Synthese der Starter wird mindestens ein Alkylenoxid mit mindestens einem Monoalkohol umgesetzt, der ein aliphatischer oder aromatischer Monoalkohol ist. Bevorzugt handelt es sich um ein lineares oder verzweigtes Alkanol mit einem bis zwölf Kohlenstoffatomen, besonders bevorzugt handelt es sich um Methanol, Ethanol, Propanol oder Butanol. Insbesondere bevorzugt handelt es sich um Methanol. Für das erfindungsgemäße Verfahren ist ebenfalls möglich, Mischungen verschiedener Starter einzusetzen.

In einer besonderen Ausführungsform wurde der Starter ebenfalls nach einem erfindungsgemäßen Verfahren hergestellt.

Als Starter werden Verbindungen oder Mischungen von Verbindungen der allgemeinen Formel (I) eingesetzt.

R¹-(OCH₂CHR²)ₖ-OH (I)

worin R¹ einen aliphatischen oder ein aromatischen Rest,
R² Wasserstoff oder einen aliphatischen oder einen aromatischen Rest,
k eine ganze Zahl von 1 bis 15 bedeutet.

Bevorzugt ist k eine ganze Zahl von 1 bis 5, besonders bevorzugt ist k eine ganze Zahl von 1 bis 3.
R¹ ist bevorzugt ein aliphatischer Rest, besonders bevorzugt ist R¹ ein linearer oder verzweigter Alkylrest mit 1 bis 13 Kohlenstoffatomen, ganz besonders bevorzugt ist R¹ Methyl, Ethyl, Propyl, Butyl oder Dodecyl, insbesondere bevorzugt ist R¹ Methyl.

R² ist bevorzugt Wasserstoff oder ein Alkylrest. Besonders bevorzugt ist R² H, -CH₃ oder -CH₂CH₃.

Erfindungsgemäß wird der Starter oder das Startergemisch mit Alkylenoxid umgesetzt.

Geeignete Alkylenoxide zur Herstellung von MPAO können unter Normalbedingungen oder unter den Reaktionsbedingungen flüssig oder gasförmig sein. Sie können endständig oder mittelständig eine Epoxidgruppe enthalten. Bevorzugt sind Alkylenoxide mit endständiger Epoxidgruppe.
Geeignete Alkylenoxide können unsubstituiert, einfach substituiert oder zweifach substituiert sein. Bevorzugt sind sie unsubstituiert oder einfach substituiert. Substituierte Alkylenoxide können einen oder mehrere aliphatische, cycloaliphatische, araliphatische oder aromatische Reste tragen. Bevorzugt sind geeignete Alkylenoxide mit einer linearen oder verzweigten Alkylkette substituiert. In einer bevorzugten Ausführungsform hat diese Alkylkette ein bis zehn Kohlenstoffatome, beispielsweise ein bis fünf Kohlenstoffatome.
Besonders bevorzugte Alkylenoxide sind ausgewählt aus Ethylenoxid, Propylenoxid, n-Butylenoxid, iso-Butylenoxid, 1,2-Epoxypentan, Decenoxid und Styroloxid. Alkylenoxide können alleine oder als Gemisch unterschiedlicher Alkylenoxide eingesetzt werden. Die eingesetzten Alkylenoxide weisen einen Gehalt an Wasser von weniger als 300 ppm auf, besonders bevorzugt weniger als 50 ppm.

Die Zugabe von Starter und Katalysator kann gleichzeitig oder nacheinander stattfinden. Die Reihenfolge der Zugabe ist erfindungsgemäß im Allgemeinen nicht wesentlich.

Ein Destillationsschritt erfolgt bevorzugt vor der Zugabe von Alkylenoxid. Bevorzugt wird bei Temperaturen von 80 bis 145°C, besonders bevorzugt bei 120 bis 135°C destilliert. Üblicherweise wird ein Destillationsvakuum von 10 bis 500 mbar, bevorzugt 60 bis 200 mbar, besonders bevorzugt 150 bis 170 mbar angelegt. In einer bevorzugten Ausführungsform der Erfindung wird der Destillationsschritt derart ausgeführt, dass Starter und Katalysator bei gleichzeitiger Evakuierung unter Destillationsvakuum aufgeheizt werden. Bei Erreichen der Destillationstemperatur wird das Gemisch für eine gewisse Zeitspanne den Destillationsbedingungen unterworfen. Diese Zeitspanne kann kurz sein, zum Beispiel unterhalb einer Stunde liegen. Die Länge dieser Zeitspanne richtet sich zum Beispiel nach den apparativen Randbedingungen und den eingesetzten Einsatzstoffen. Sie kann vom Fachmann dementsprechend angepasst werden. Für die Destillation kann es sinnvoll sein, Phasen mit unterschiedlichen Drücken und Temperaturen nacheinander zu durchlaufen. Die Destillationstemperaturen und Drücke können über einen Zeitraum konstant gehalten werden, können aber auch als Rampen gefahren werden, bei denen sich Druck und/oder Temperatur beständig erhöhen oder erniedrigen.
Im beanspruchten verfahren wird nicht nur die im Gemisch aus Starter und Katalysatorlösung vorhandene Wassermenge abdestilliert, sondern auch ein Teil des vorgelegten Starters abdestilliert Möglicherweise fungiert der Starter als Schleppmittel, um nicht identifizierte Komponenten aus dem vorgelegten Gemisch zu entfernen, die den Verlauf der Reaktion und zum Beispiel die Farbzahl des Produktes ungünstig beeinflussen. Es werden mindestens 0,1 Gew % des starters abdestilliert.
In einer bevorzugten Ausführungsform wird die Destillation derart ausgeführt, dass eine Menge von 0,1 bis 30 Gew% des vorgelegten Starteralkohols abdestilliert wird. Bevorzugt werden 0,1 bis 25 Gew%, besonders bevorzugt 1 bis 20 Gew% abdestilliert. Zum Beispiel werden in einer Ausführungsform 5 bis 15 Gew% Starteralkohol, in einer anderen 10 bis 20 Gew% abdestilliert. Nach Beendigung der Destillation entählt das Starter/Katalysatorgemisch wengjer als 1000 ppm Wasser. Bevorzugt wird die Destillation so ausgeführt, dass weniger als 500 ppm oder weniger als 200 ppm Wasser in der Mischung enthalten sind.
In einer bevorzugten Ausführungsform kann der abdestillierte Starter gesammelt und wieder verwendet werden.

Die Zugabe von Alkylenoxid erfolgt vorteilhaft nach beendeter Destillation. Die Alkylenoxide reagieren mit dem vorgelegten Starter. Sind die eingesetzten Alkylenoxide unter Normalbedingungen gasförmig, geschieht die Zugabe zweckmäßig unter erhöhtem Druck. Bevorzugt erfolgt die Zugabe von Alkylenoxid über einen längeren Zeitraum, zum Beispiel über mehrere Stunden, verteilt. Die Zugabe kann dabei unterbrochen und anschließend wieder aufgenommen werden. Werden verschiedene Alkylenoxide eingesetzt, so können diese als Gemisch zugegeben werden oder nacheinander. Nachdem die gesamte Menge Alkylenoxid zugegeben worden ist, kann das Reaktionsgemisch noch bis zur Druckkonstanz bei Reaktionstemperatur gerührt werden, um einen möglichst vollständigen Umsatz des Alkylenoxids zu gewährleisten. Restmengen freien Alkylenoxids können durch Anlegen von Vakuum aus dem Reaktionsgemisch entfernt werden.

Nach beendeter Reaktion wird das Reaktionsgemisch in der Regel mit mindestens einer Säure neutralisiert. Optional können außerdem Stabilisatoren oder weitere Additive zugegeben werden. Säuren und weitere Additive können entweder direkt nach Beendigung der Reaktion oder zu einem späteren Zeitpunkt zugegeben werden. Dieses kann entweder im selben Behältnis geschehen, in dem auch die Reaktion durchgeführt wurde, oder an einer anderen Stelle. Die Zugabe kann zum Beispiel in einem anderen Rührkessel durchgeführt werden oder kontinuierlich in einer Rohrleitung. Bevorzugt wird zuerst neutralisiert und in darauf folgenden Schritten weiter additiviert.
Geeignete Säuren zur Neutralisation des MPAO sind prinzipiell alle organischen oder anorganischen Säuren. Geeignete Säuren haben in der Regel eine höhere Acidität als die hergestellten Alkohole. Bevorzugt weist der pKs der Säure zu den durch die Neutralisation generierte Alkoholen eine Differenz von mindestens zwei auf. Bevorzugte anorganische Säuren sind zum Beispiel Chlorwasserstoffsäure und Phosphorsäure. Bevorzugt sind weiterhin organische Säuren. Ganz besonders bevorzugt sind Essigsäure, Isononansäure, Milchsäure oder para-Toluolsulfonsäure. Auch Mischungen unterschiedlicher Säuren können eingesetzt werden.
Als Stabilisatoren können zum Beispiel dem Fachmann bekannte Lichtschutz- und Oxidationsstabilisatoren verwendet werden. Insbesondere sind dieses Phenole und sterisch gehinderte Amine (HALS). Bevorzugt sind zum Beispiel 2,6-Di-^{tert}butyl-4-methylphenol (BHT), para-Methoxyphenol, Hydrochinon und sterisch gehinderte Phenole, wie sie zum Beispiel unter dem Handelsnamen Irgastab™ Pur, Irganox™ oder Tinuvin™ vertrieben werden. Gegebenenfalls kann der Stabilisator noch sekundäre Stabilisatoren wie Phosphite oder Phosphonite enthalten.

In einer Ausführungsform der Erfindung ist den oben genannten Verfahrensschritten ein Reinigungsschritt des Reaktors vorgeschaltet. Dieser kann zum Beispiel mit Wasserdampf oder mit flüssigem Wasser durchgeführt werden. In einer bevorzugten Ausführungsform wird das erfindungsgemäße Verfahren durchgeführt, ohne dass der Reaktor nach dem Ablassen des Reaktionsgemisches der vorhergehenden Produktionspartie einer Reinigung unterzogen wird. Dadurch, dass das erfindungsgemäße Verfahren ohne Reinigungsschritte zwischen den Produktionspartien durchgeführt werden kann, wird die nutzbare Kapazität des Reaktors deutlich gesteigert. Weiterhin werden durch die Einsparung von Lösungsmitteln zum Spülen, die zudem oft wasserfrei eingesetzt werden, Kosten eingespart und die Abfallbilanz des Prozesses verbessert.
Wird keine Reinigung des Reaktionsbehältnisses durchgeführt, befinden sich vor der Zugabe der Komponenten im Reaktor noch bis zu 2 Gew% der Reaktorkapazität an MPAO aus dem vorhergehenden Produktionsansatz. Die Eigenschaften der so erhaltenen Produkte im Bezug auf Diolgehalt, mittlere Molmasse, Farbzahl und Viskosität und rheologische Eigenschaften sind vergleichbar zu denen, vor deren Herstellung der Reaktor gereinigt worden war und die eine vergleichbare mittlere Molmasse haben. Das Verfahren mit dieser Ausprägung ist bevorzugt für Polymere mit einer molaren Masse von 300 bis 20000 g/mol, besonders bevorzugt von 500 bis 10000 g/mol, ganz besonders bevorzugt von 750 bis 8000 g/mol, insbesondere bevorzugt von 1000 bis 5000 g/mol. Das erfindungsgemäße verfahren eignet sich zur Herstellung von Gemishen von MPAO, die oligomodale Molmassenverteilungen zeigen, die mindestens zwei Maxima aufweisen. Die Gemische von MPAO enthalten ein Hauptprodukt, dessen Anteil deutlich höher ist als die der anderen polymeren Bestandteile. Der Unterschied der molaren Masse zum nächst höheren und nächst tieferen Maximum beträgt in der Regel von 80 % bis 125 %, bevorzugt von 90% bis 115 % der molaren Masse der Komponente mit dem höchsten Anteil im Gemisch. Der Gehalt der den einzelnen Maxima zuzuordnenden Komponenten beträgt jeweils das 30- bis 1000fache, bevorzugt das 50 bis 500fache, besonders bevorzugt das 75 bis 200 fache der Komponente, die dem Maximum mit der nächst höheren molaren Masse zuzuordnen ist.
Die Gemische von MPAO haben vergleichbare Eigenschaften im Bezug auf rheologische Eigenschaften und Diolgehalt wie Gemische von MPAO mit monomodalen Molmassenverteilungen mit der gleichen durchschnittlichen molaren Masse, obwohl die vorliegenden Gemische einen Anteil von Polymeren mit einem deutlich höheren Molekulargewicht haben. Dazu weisen sie einige zusätzliche Vorteile auf. So sind die genauen Polymerverteilungen sehr charakteristisch. Die Gemische von MPAO zeigen einen anlagenspezifischen Fingerabdruck. Hierdurch lässt sich eine Qualitätskontrolle der Produkte dadurch erleichtern, dass man einzelne Produktionschargen im Nachhinein einzelnen Produzenten und sogar einzelnen Produktionsanlagen, gegebenenfalls sogar einzelnen Produktionskampagnen zuordnen kann.

Monohydroxypolyalkylenoxide MPAO, die nach dem erfindungsgemäßen Verfahren hergestellt worden sind, weisen einen Gehalt an Diol von maximal 10000 ppm auf, besonders bevorzugt von maximal 6000 ppm, ganz besonders bevorzugt maximal 4000 ppm, insbesondere bevorzugt 3000 ppm. Sie können aus einem Alkylenoxid aufgebaut sein oder es kann sich um Copolymere verschiedener Alkylenoxide handeln. Bei den Copolymeren kann es sich um statistische Copolymere oder um Blockcopolymere handeln.
Bevorzugt umfassen die MPAO fünf bis 400 Alkylenoxideinheiten, besonders bevorzugt 10 bis 200, ganz besonders bevorzugt 15 bis 100 und insbesondere bevorzugt 20 bis 50. Die OH Zahl der Polymere wird bestimmt gemäß DIN 53240 und lässt sich vom Fachmann in die mittlere Molmasse umrechnen. MPAO, die nur aus Ethylenoxid aufgebaut sind, haben zum Beispiel eine mittlere molare Masse von 300 bis 20000 g/mol, vorzugsweise von 500 bis 10000, besonders bevorzugt von 750 bis 8000 g/mol, insbesondere bevorzugt von 1000 bis 5000 g/mol.

Die molare Masse der MPAO lässt sich nach dem erfindungsgemäßen Verfahren sehr gut steuern und reproduzieren. Führt man das erfindungsgemäße Verfahren mehrere Male hintereinander aus, so zeigen die OH-Zahlen lediglich eine geringe Schwankungsbreite. Für Produkte, die ausschließlich Ethylenoxid als Alkylenoxid enthalten, schwanken die OH Zahlen zum Beispiel maximal um 2,0 mg KOH/100 g, bevorzugt 1,0 mg, besonders bevorzugt um 0,7 mg und ganz besonders 0,5 mg KOH/100 g.

Die Diolgehalte der MPAO streuen lediglich mit einer Standardabweichung von maximal 2500 ppm.

Polymere nach einem erfindungsgemäßen Verfahren eignen sich zur weiteren Umsetzung für die Anwendung in Emulgatoren, Dispergiermitteln und Fließverbesserern für mineralische Baustoffe. Unter mineralischen Baustoffen sind insbesondere Zubereitungen zu verstehen, die als wesentliche Bestandteile mineralische Bindemittel wie Kalk, Gips und/oder insbesondere Zement sowie als Zuschläge dienende Sande, Kiese, gebrochene Gesteine oder sonstige Füllstoffe wie z. B. natürliche oder synthetische Fasern enthalten.

### Beispiele

Die folgenden Beispiele sollen die Eigenschaften dieser Erfindung erläutern, ohne sie aber einzuschränken.
Als "Teile", Prozent oder ppm werden in dieser Schrift, wenn nicht anders angegeben, Gewichtsanteile verstanden.

Die Bestimmung des Diolgehalts erfolgte flüssigchromatographisch über HPLC. Dazu wurden die freien OH-Gruppen der Produkte durch Umsetzung mit einem Überschuss an Phenylisocyanat derivatisiert. Die chromatographische Trennung erfolgt dann mittels einer HPLC-Pumpe vom Typ Varian® 9012 an einer Kieselgelsäule vom Typ Intersil ODS-3 (5µm 150*4mm). Die Detektion erfolgte mit einem UV-Detektor vom Typ Varian® 9050.
Die OH-Zahl wurde gemäß DIN 53240 durch Veresterung der OH-Gruppen mit Essigsäureanhydrid und Rücktitration der unverbrauchten Essigsäure bestimmt.
Die molare Masse wurde aus der so bestimmten OH Zahl errechnet.

### Herstellung von Polyethylenglykolmonomethylether mit einer mittleren molaren Masse von 1990 g/mol (MPAO 1)

In einem Rührreaktor wurden 1744 kg Diethylenglykolmonomethylether und 55,3 kg einer 45 %igen Lösung von Kaliumhydroxid in Wasser vorgelegt. Das Gemisch wurde in 30 min. im Vakuum (90 mbar) bis auf 125°C aufgeheizt und nachfolgend das Vakuum mit Stickstoff aufgehoben. Anschließend wurden bei einer Temperatur von 150°C und einem Druck von maximal 5,2 bar 24137 kg Ethylenoxid eindosiert. Nach erfolgter Dosierung wurde der Reaktorinhalt durch Zugabe von 27,1 kg Essigsäure neutralisiert und der Reaktor entleert.

### Herstellung von Polyethylenglykolmonomethylether mit einer mittleren molaren Masse von 2900 g/mol (MPAO 2)

In einem Reaktor wurden 1211 kg Diethylenglykolmonomethylether parallel mit 50,1 kg 45 Gew.%iger Kalilauge vorgelegt. Das Gemisch wurde in 30 min. im Vakuum (90 mbar) bis auf 125°C aufgeheizt und nachfolgend das Vakuum mit Stickstoff aufgehoben. Anschließend wurden bei einer Temperatur von 150°C und einem Druck von maximal 5,6 bar 24669 kg Ethylenoxid eindosiert. Nach erfolgter Dosierung wurde der Reaktorinhalt durch Zugabe von 26,5 kg Essigsäure neutralisiert und der Reaktor entleert. Während der Entleerung wurden hinter dem Bodenauslauf des Reaktors 2,2 kg 2,6-Di-^{tert}butyl-4-methylphenol in den Produktstrom dosiert.

### Herstellung von Polyethylenglykolmonomethylether mit einer mittleren molaren Masse von 4700 g/mol (MPAO 3)

In einem Reaktor wurden 796 kg Diethylenglykolmonomethylether parallel mit 36,5 kg 45 Gew.%iger Kalilauge vorgelegt. Das Gemisch wurde in 30 min. im Vakuum (90 mbar) bis auf 125°C aufgeheizt und nachfolgend das Vakuum mit Stickstoff aufgehoben. Anschließend wurden bei einer Temperatur von 150°C und einem Druck von maximal 5,1 bar 25698 kg Ethylenoxid eindosiert. Nach erfolgter Dosierung wurde der Reaktorinhalt durch Zugabe von 27,1 kg Essigsäure neutralisiert und der Reaktor entleert.

### Beispiel 1

Die oben beschriebenen Polyethylenglykolmonomethylether MPAO 1 bis 3 wurden in der in Tabelle 1 angegebenen Reihenfolge im selben Reaktor durchgeführt. Der Reaktor wurde zwischen den einzelnen Experimenten nicht gereinigt. Es wurden die in Tabelle 1 angegebenen Analysenwerte erzielt

**Tabelle 1:**

| Bsp. | Produkt | OH-Zahl [mg KOH/100 g] | Diolgehalt [Gew%] |
|---|---|---|---|
| 1.1 | MPAO 2 | 19,7 | 0,1 |
| 1.2 | MPAO 2 | 19,8 | 0,2 |
| 1.3 | MPAO 2 | 19,1 | 0,2 |
| 1.4 | MPAO 1 | 27,1 | 0,2 |
| 1.5 | MPAO 3 | 12,3 | 0,3 |

### Beispiel 2

Die oben beschriebenen Polyethylenglykolmonomethylether MPAO 1 bis 3 wurden in der in Tabelle 2 angegebenen Reihenfolge im selben Reaktor durchgeführt. Der Reaktor wurde zwischen den einzelnen Experimenten nicht gereinigt. Die in Tabelle 2 angegebenen Analysenwerte wurden erzielt:

**Tabelle 2**

| Bsp. | Produkt | OH-Zahl [mg KOH/100 g] | Diolgehalt [Gew%] |
|---|---|---|---|
| 2.1 | MPAO 1 | 28,2 | 0,1 |
| 2.2 | MPAO 1 | 28,0 | 0,5 |
| 2.3 | MPAO 1 | 28,4 | 0,4 |
| 2.4 | MPAO 1 | 29,0 | 0,6 |
| 2.5 | MPAO 3 | 11,4 | 0,3 |

### Beispiel 3

MPAO 2 wurde fünf Mal im selben Reaktor hergestellt. Der Reaktor wurde zwischen den einzelnen Experimenten nicht gereinigt. Die in Tabelle 3 angegebenen Analysenwerte wurden erzielt:

**Tabelle 3**

| Bsp. | Produkt | OH-Zahl [mg KOH/100 g] | Diolgehalt [Gew%] |
|---|---|---|---|
| 3.1 | MPAO 2 | 19,3 | 0,1 |
| 3.2 | MPAO 2 | 19,4 | 0,3 |
| 3.3 | MPAO 2 | 19,3 | 0,2 |
| 3.4 | MPAO 2 | 19,9 | 0,3 |
| 3.5 | MPAO 2 | 19,1 | 0,3 |

### Beispiel 4

MPAO 1 bis 3 wurden in zufälliger Reihenfolge insgesamt 136 mal im selben Reaktor hergestellt, wobei die Abfolge der MPAO-Partien durch insgesamt 94 Reinigungen mit Wasser und/oder Wasserdampf und in zufälliger Reihenfolge so unterbrochen wurde, dass zwischen einer und acht Partien MPAO hintereinander ohne Unterbrechung hergestellt wurden. Dabei wurden folgende durchschnittliche Analysenwerte und Schwankungsbreiten erzielt:

**Tabelle 4**

| Produkt | Ø OH-Zahl [mg KOH/100 g] | ± (OHZ) [mg KOH/100 g] | Ø Diolgehalt [ppm] | ± (Diolgehalt) [ppm] |
|---|---|---|---|---|
| MPAO 1 | 28,61 | 1,38 | 3950 | 2206 |
| MPAO 2 | 19,22 | 0,42 | 2807 | 1735 |
| MPAO 3 | 12,15 | 1,75 | 3000 | 1788 |

## Patentansprüche

1. Verfahren zur Herstellung von Monohydroxypolyalkylenoxiden (MPAO), die maximal 10000 ppm Diol enthalten, umfassend Umsetzen von Verbindungen oder Mischungen von Verbindungen der allgemeinen Formel (I)
R¹-(OCH₂-CHR²)ₖ-OH (I),
worin R¹ einen aliphatischen oder ein aromatischen Rest,
R² Wasserstoff oder einen aliphatischen oder einen aromatischen Rest,
k eine ganze Zahl von 1 bis 15 bedeutet
als Starter mit mindestens einem Alkylenoxid mit einem Wassergehalt von weniger als 300 ppm in Gegenwart mindestens eines basischen Katalysators, wobei der Katalysator als Lösung in Wasser und/oder Alkohol oder in Lösemittelgemischen, die mindestens 10 Gew% Wasser und/oder Alkohol enthalten, eingesetzt wird, wobei Starter und Katalysator vorgelegt werden, die Vorlage einer Destillation unterworfen wird, bis mindestens 0,1 Gew% des Starters abdestilliert sind und nach Beendigung der Destillation das Starter/Katalysatorgemisch einen Wassergehalt von weniger als 1000 ppm hat.

2. Verfahren nach Anspruch 1, wobei als Katalysator ein Alkalimetallhydroxid oder Alkalimetallmethylat eingesetzt wird.

3. Verfahren nach mindestens einem der vorgehenden Ansprüche, wobei als Starter eine Verbindung oder Mischungen von Verbindungen der allgemeinen Formel I eingesetzt werden
R¹-(OCH₂-CHR²ₖ-OH (I)
worin R¹ einen C₁- bis C₁₃-Alkylrest,
R² Wasserstoff oder einen C₁- bis C₄-Alkylrest und
k eine ganze Zahl von 1 bis 5 bedeutet.

4. Verfahren nach mindestens einem der vorherigen Ansprüche, wobei der Starter Diethylenglykolmonomethylether ist.

5. Verfahren nach mindestens einem der vorherigen Ansprüche, wobei als Alkylenoxid Ethylenoxid verwendet wird.

6. Verfahren nach mindestens einem der vorherigen Ansprüche, wobei MPAO weniger als 6000 ppm Diole enthält.

7. Verfahren nach mindestens einem der vorherigen Ansprüche, wobei MPAO 5 bis 200 Alkylenoxideinheiten umfasst.

8. Verfahren nach mindestens einem der vorherigen Ansprüche, wobei der Reaktor bei der Zugabe von Starter und Katalysator zusätzlich bis zu 2 Gew% des maximalen Reaktorinhaltes MPAO enthält, das nach einem der vorherigen Ansprüche hergestellt wurde.

9. Verfahren nach mindestens einem der vorherigen Ansprüche, wobei der Starter ebenfalls nach einem der vorherigen Ansprüche hergestellt wurde.

## Claims

1. A process for the preparation of monohydroxypolyalkylene oxides (MPAO) which comprise not more than 10000 ppm of diol, comprising the reaction of compounds or mixtures of compounds of the general formula (I)
R¹- (OCH₂-CHR²)ₖ-OH (I)
in which R¹ is an aliphatic or an aromatic radical, R² is hydrogen or an aliphatic or an aromatic radical,
k is an integer from 1 to 15,
as a starter with at least one alkylene oxide having a water content of less than 300 ppm in the presence of at least one basic catalyst, the catalyst being used as a solution in water and/or alcohol or in solvent mixtures which comprise at least 10% by weight of water and/or alcohol, starter and catalyst being initially taken, the initially taken mixture being subjected to a distillation until at least 0.1% by weight of the starter has been distilled off and, after the end of the distillation, the starter/catalyst mixture having a water content of less than 1000 ppm.

2. The process according to claim 1, the catalyst used being an alkali metal hydroxide or alkali metal methylate.

3. The process according to at least one of the preceding claims, the starter used being a compound or a mixture of compounds of the general formula I
R¹-(OCH₂-CHR²)ₖ-OH (I)
in which R¹ is a C₁- to C₁₃-alkyl radical,
R² is hydrogen or a C₁- to C₄-alkyl radical and
k is an integer from 1 to 5.

4. The process according to at least one of the preceding claims, the starter being diethylene glycol monomethyl ether.

5. The process according to at least one of the preceding claims, the alkylene oxide used being ethylene oxide.

6. The process according to at least one of the preceding claims, MPAO comprising less than 6000 ppm of diols.

7. The process according to at least one of the preceding claims, MPAO comprising from 5 to 200 alkylene oxide units.

8. The process according to at least one of the preceding claims, the reactor additionally comprising up to 2% by weight of the maximum reactor content of MPAO, which was prepared according to any of the preceding claims, on addition of starter and catalyst.

9. The process according to at least one of the preceding claims, the starter also being prepared according to any of the preceding claims.

## Revendications

1. Procédé de fabrication d'oxydes de monohydroxypolyalkylène (MPAO), qui contiennent au plus 10 000 ppm de diol, comprenant la mise en réaction de composés ou de mélanges de composés de formule générale (I)
R¹-(OCH₂-CHR²)ₖ-OH (I)
dans laquelle R¹ signifie un radical aliphatique ou aromatique,
R² signifie l'hydrogène ou un radical aliphatique ou aromatique,
k signifie un nombre entier de 1 à 15
en tant que démarreur avec au moins un oxyde d'alkylène ayant une teneur en eau inférieure à 300 ppm en présence d'au moins un catalyseur basique, le catalyseur étant utilisé sous la forme d'une solution dans de l'eau et/ou un alcool ou dans des mélanges de solvants qui contiennent au moins 10 % en poids d'eau et/ou d'alcool, le démarreur et le catalyseur étant chargés initialement, la charge initiale étant soumise à une distillation jusqu'à ce qu'au moins 0,1 % en poids du démarreur soit éliminé par distillation et, à la fin de la distillation, le mélange démarreur/catalyseur présente une teneur en eau inférieure à 1 000 ppm.

2. Procédé selon la revendication 1, dans lequel un hydroxyde de métal alcalin ou un méthylate de métal alcalin est utilisé en tant que catalyseur.

3. Procédé selon au moins l'une quelconque des revendications précédentes, dans lequel un composé ou des mélanges de composés de formule générale I sont utilisés en tant que démarreur
R¹-(OCH₂-CHR²)ₖ-OH (I)
dans laquelle R¹ signifie un radical alkyle en C₁ à C₁₃,
R² signifie l'hydrogène ou un radical alkyle en Ci à C₄, et
k signifie un nombre entier de 1 à 5.

4. Procédé selon au moins l'une quelconque des revendications précédentes, dans lequel le démarreur est l'éther monométhylique de diéthylène glycol.

5. Procédé selon au moins l'une quelconque des revendications précédentes, dans lequel l'oxyde d'éthylène est utilisé en tant qu'oxyde d'alkylène.

6. Procédé selon au moins l'une quelconque des revendications précédentes, dans lequel le MPAO contient moins de 6 000 ppm de diols.

7. Procédé selon au moins l'une quelconque des revendications précédentes, dans lequel le MPAO comprend 5 à 200 unités oxyde d'alkylène.

8. Procédé selon au moins l'une quelconque des revendications précédentes, dans lequel, lors de l'ajout du démarreur et du catalyseur, le réacteur contient également jusqu'à 2 % en poids de la capacité maximale du réacteur de MPAO, qui a été fabriqué selon l'une quelconque des revendications précédentes.

9. Procédé selon au moins l'une quelconque des revendications précédentes, dans lequel le démarreur a également été fabriqué selon l'une quelconque des revendications précédentes.
